# DEMANDE DE BREVET EUROPEEN

(11) **EP 1 575 247 A1**
(43) Date de publication de la demande: **14.09.2005**
(21) Numéro de dépôt: 05290525.4
(22) Date de dépôt: 08.03.2005
(51) Int. Cl.: H04L 29/14, H04L 12/56

(54) **Système de transmission d'informations entre différents organes fonctionnels d'une plateforme de combat**

(30) Priorité: 10.03.2004 FR 0402499
(71) Demandeur: DCN, 75015 Paris (FR)
(72) Inventeur: Mazenc, Philippe, 83000 Toulon (FR)
(74) Mandataire: Habasque, Etienne J. Jean-François

(57) **Abrégé**

Ce système de transmission d'informations entre différents organes fonctionnels d'une plateforme de combat (11), comportant au moins un système de plateforme et un système de combat, est caractérisé en ce qu'il comporte des moyens formant réseau (10) de transmission d'informations commun entre les organes du système de plateforme et du système de combat, comprenant une ossature de commutateurs de réseau (21,22) répartis dans la plateforme (11) et raccordés en boucle fermée par au moins une ligne de transmission d'informations (23).

## Description

La présente invention concerne un système de transmission d'informations entre des organes fonctionnels d'une plateforme de combat.

Une telle plateforme de combat peut par exemple être formée par un bâtiment de surface ou un sous-marin.

De telles plateformes comportent généralement plusieurs systèmes, parmi lesquels un système de plateforme, un système de combat, etc...

Chacun de ces systèmes est lui-même formé de sous-systèmes comprenant des équipements ou organes fonctionnels, permettant de remplir les différentes fonctions liées notamment à la gestion du fonctionnement de la plateforme d'une part et du système d'armes embarqué d'autre part.

Cependant dans l'état de la technique, la transmission des informations entre ces différents systèmes met en oeuvre des réseaux de transmission différents, chacun dédié à un système particulier.

Par ailleurs, ces réseaux peuvent également mettre en oeuvre des protocoles d'échange d'informations différents.

On conçoit que ceci présente un certain nombre d'inconvénients, notamment au niveau du nombre de réseaux à utiliser et du nombre de lignes de transmission d'informations qu'il convient d'embarquer, de la difficulté de maintenance de tels systèmes de transmission d'informations et des difficultés à faire évoluer un tel système.

Le but de l'invention est donc de résoudre ces problèmes.

A cet effet, l'invention a pour objet un système de transmission d'informations entre différents organes fonctionnels d'une plateforme de combat, comportant au moins un système de plateforme et un système de combat, caractérisé en ce qu'il comporte des moyens formant réseau de transmission d'informations commun entre les organes du système de plateforme et du système de combat, comprenant une ossature de commutateurs de réseau répartis dans la plateforme et raccordés en boucle fermée par au moins une ligne de transmission d'informations.

Suivant d'autres caractéristiques :
- les commutateurs de réseau sont raccordés par deux lignes de transmission d'informations ;
- les commutateurs de réseau sont disposés sensiblement sur le plan médian longitudinal de la plateforme à au moins deux niveaux différents de celle-ci, pour former des branches supérieure et inférieure de la boucle ;
- la plateforme est un bâtiment de surface et l'un des niveaux sur lequel sont disposés les commutateurs de réseau de la branche supérieure de la boucle, sont placés au-dessus du pont d'étanchéité de la plateforme et les autres commutateurs de réseau de la branche inférieure de la boucle, en dessous de celui-ci ;
- la plateforme est divisée selon son axe longitudinal, en zones de sécurité et chaque zone de sécurité comporte au moins un commutateur de réseau de la branche supérieure de la boucle et un commutateur de réseau de la branche inférieure de la boucle ;
- les lignes de transmission d'informations entre les commutateurs de réseau, sont disposées de part et d'autre du plan médian longitudinal de la plateforme, de manière à être éloignées l'une de l'autre, entre ces commutateurs ;
- des organes fonctionnels sont raccordés directement à au moins un commutateur de réseau ;
- des organes fonctionnels sont raccordés directement à deux commutateurs de réseau différents ;
- des organes fonctionnels sont raccordés à au moins un commutateur de réseau, à travers au moins un commutateur de périphérique ;
- des organes fonctionnels sont raccordés à deux commutateurs de périphérique différents raccordés chacun à deux commutateurs de réseau différents ;
- les lignes de transmission d'informations comprennent des fibres optiques ; et
- le réseau est un réseau TCP/IP commuté.

L'invention sera mieux comprise à la lecture de la description qui va suivre, donnée uniquement à titre d'exemple et faite en se référant aux dessins annexés, sur lesquels :
- la Fig.1 illustre de façon schématique un système de transmission d'informations selon l'invention ;
- les Figs.2 et 3 représentent des vues schématiques respectivement de côté et de dessus illustrant l'implantation de moyens formant réseau de transmission d'informations d'un système de transmission d'informations selon l'invention, dans une plateforme ;
- la Fig.4 illustre un exemple de connexion d'organes fonctionnels à des moyens formant réseau de transmission d'informations d'un système selon l'invention ;
- les Figs.5 et 6 illustrent le comportement d'un système de transmission selon l'invention en cas de coupures de lignes de transmission d'informations ; et
- la Fig.7 illustre les apports d'un tel système de transmission.

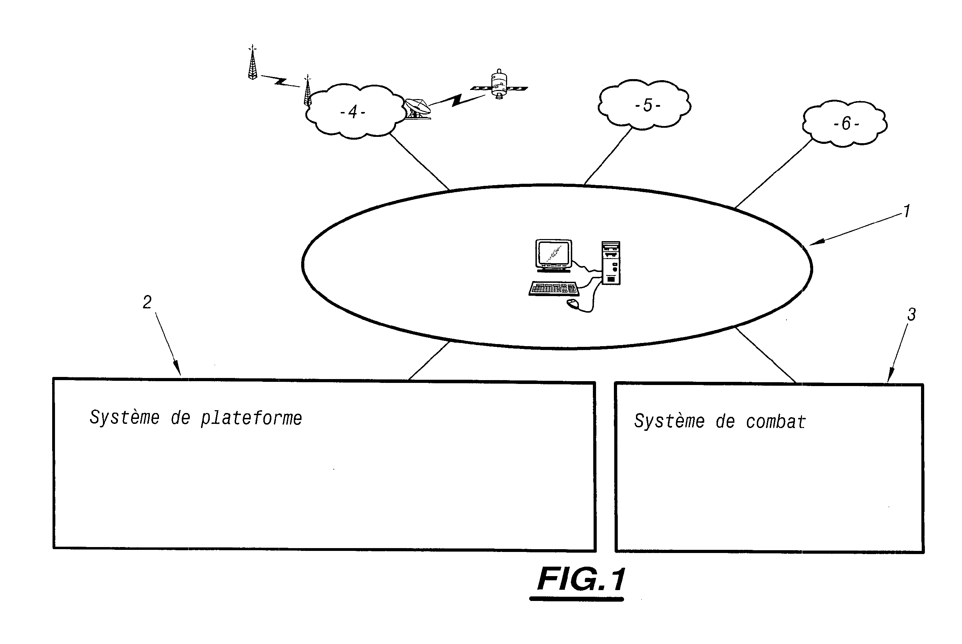

On a en effet illustré sur la figure 1, un système de transmission d'informations entre différents organes fonctionnels d'une plateforme de combat telle qu'un bâtiment de surface, un sous-marin, etc...

Sur cette figure 1, le système de transmission d'informations est désigné par la référence générale 1 et permet donc d'assurer la transmission d'informations entre les organes fonctionnels des différents systèmes de la plateforme de combat, tels que par exemple le système de plateforme désigné par la référence générale 2 et le système de combat tel que désigné par la référence générale 3.

D'autres systèmes, tels que par exemple un système de communications extérieures désigné par la référence générale 4 et un système de liaison à quai tel que désigné par la référence générale 5, peuvent également être raccordés à un tel système de transmission d'informations.

D'autres systèmes encore tels que désignés par la référence générale 6, peuvent être envisagés et raccordés à un tel réseau embarqué.

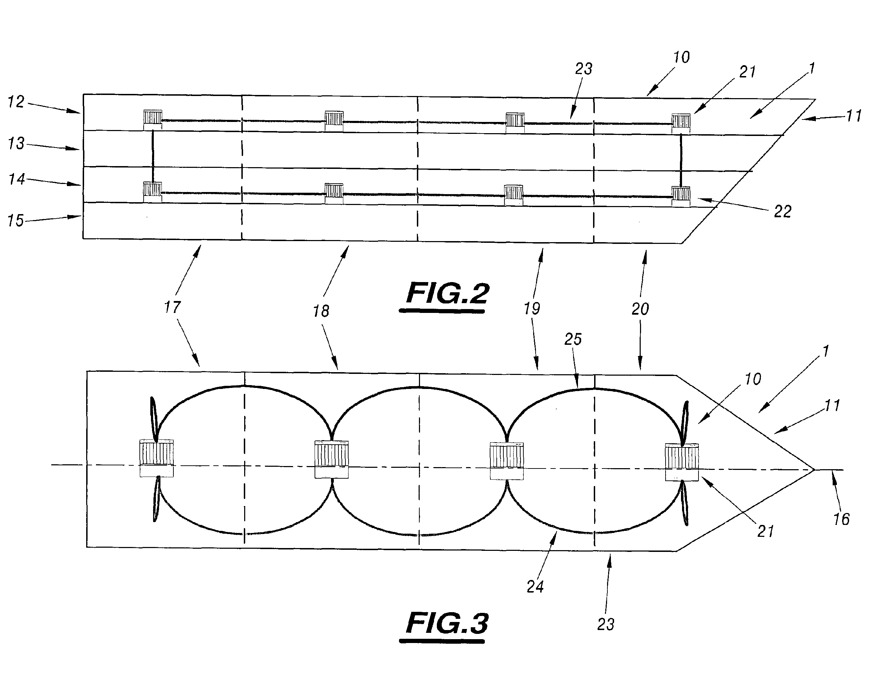

En fait, et comme cela est illustré sur les figures 2 et 3, le système de transmission selon l'invention comporte des moyens formant réseau de transmission d'informations commun entre des organes de ces différents systèmes, ces moyens formant réseau de transmission d'informations commun comprenant une ossature de commutateurs de réseau, répartis dans la plateforme et raccordés en boucle fermée par au moins une ligne de transmission d'informations.

Ces moyens formant réseau sont désignés par la référence générale 10 sur les figures 2 et 3, la plateforme étant désignée par la référence générale 11.

Dans l'exemple illustré, cette plateforme est un bâtiment de surface qui présente plusieurs niveaux ou ponts, tels que les niveaux 12, 13, 14 et 15, un plan médian longitudinal désigné par la référence générale 16 et qui est divisé selon son axe longitudinal en zones de sécurité, telles que les zones 17, 18, 19 et 20.

Bien entendu, d'autres configurations de la plateforme peuvent être envisagées, celle-ci étant par exemple normalisée.

Comme cela a été indiqué précédemment, les moyens formant réseau de transmission d'informations comportent une ossature de commutateurs de réseau, tels que par exemple les commutateurs de réseau 21 et 22, qui sont répartis dans la plateforme et raccordés en boucle par au moins une ligne de transmission d'informations schématisée par la référence générale 23 sur ces figures et qui s'étend donc dans la plateforme entre les différents commutateurs afin de raccorder ceux-ci les uns aux autres.

En fait, les commutateurs de réseau sont disposés sensiblement sur le plan médian longitudinal 16 de la plateforme 11 à au moins deux niveaux ou ponts différents de celle-ci, pour former des branches supérieure et inférieure de la boucle.

Ainsi par exemple, des commutateurs de réseau peuvent être disposés dans les niveaux 12 et 14 de la plateforme pour former les branches supérieure et inférieure de la boucle, respectivement.

De plus, un commutateur de réseau de chaque branche, c'est-à-dire un commutateur de réseau de la branche supérieure et un commutateur de réseau de la branche inférieure de la boucle, tels que les commutateurs 21 et 22, sont disposés dans chacune des zones de sécurité 17, 18, 19 et 20 de la plateforme, définies selon l'axe longitudinal de celle-ci.

En fait, la branche supérieure et la branche inférieure de la boucle, dans le cas où la plateforme est formée par un bâtiment de surface, peuvent être placées l'une au-dessus et l'autre au-dessous du pont d'étanchéité de celle-ci, ce pont formant de façon connue en soi, une barrière étanche entre les ponts inférieurs et supérieurs du bâtiment, afin d'empêcher l'eau ou le feu de se propager entre ces ponts en cas de voie d'eau ou d'incendie.

Cette répartition des commutateurs de réseau sur de tels niveaux différents et dans des zones de sécurité différentes, permet d'améliorer les capacités du système à subir des dégradations tout en restant opérationnel.

On notera également que ces commutateurs de réseau sont de préférence raccordés par deux lignes de transmission d'informations, qui sont disposées de part et d'autre du plan médian longitudinal 16 de la plateforme 11, de manière à être éloignées l'une de l'autre entre ces commutateurs.

Ces lignes de transmission d'informations sont par exemple désignées par les références générales 24 et 25 sur la figure 3, ce qui permet encore de durcir le système vis-à-vis des défaillances, comme cela sera décrit plus en détail par la suite.

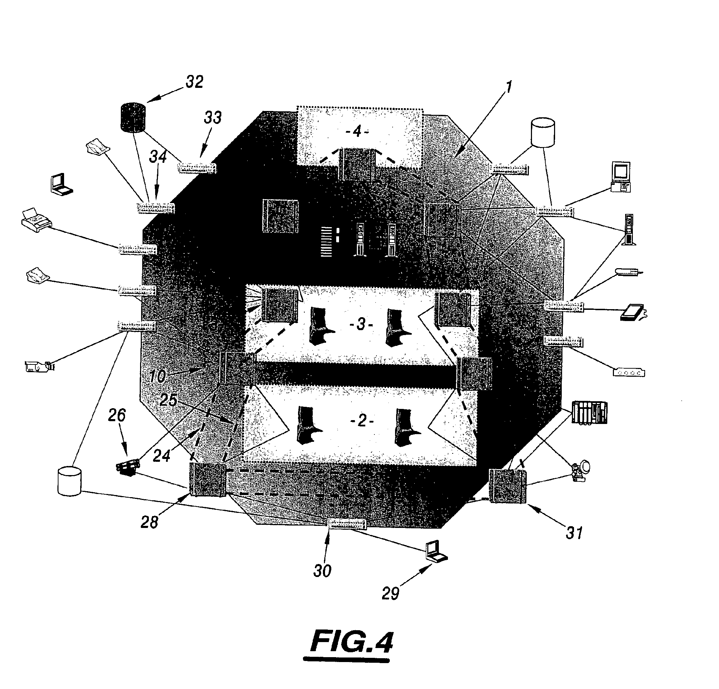

On reconnaît sur la figure 4, ces moyens formant réseau de transmission d'informations commun désignés par la référence générale 10, associés au système de plateforme 2, au système de combat 3 et au système de communications 4.

Les organes fonctionnels de ces différents systèmes sont alors reliés à ces moyens formant réseau de transmission d'informations commun 10.

Certains de ces organes fonctionnels sont en effet raccordés directement à au moins un commutateur de réseau.

De préférence, les organes fonctionnels dits sensibles du fait de leur importance à bord de la plateforme, sont raccordés directement à deux commutateurs de réseau différents ou à deux cartes d'un même commutateur de réseau.

Ceci est par exemple le cas de l'organe fonctionnel désigné par la référence générale 26 sur cette figure 4, qui est relié directement à deux commutateurs de réseau différents, désignés par les références 27 et 28.

Cependant, d'autres organes fonctionnels peuvent également être reliés à au moins un commutateur de réseau, à travers au moins un commutateur de périphérique.

Ceci est par exemple le cas d'un poste de travail quelconque désigné par la référence générale 29 sur cette figure, qui est raccordé à un commutateur de périphérique désigné par la référence générale 30, lui-même raccordé à deux commutateurs de réseau, à savoir le commutateur de réseau 28 décrit précédemment et un autre commutateur de réseau désigné par la référence générale 31.

D'autres organes fonctionnels tels que par exemple l'organe fonctionnel désigné par la référence générale 32 sur cette figure, peuvent quant à eux être reliés à deux commutateurs de périphérique, tels que les commutateurs 33 et 34, qui sont eux-mêmes raccordés chacun à deux commutateurs de réseau différents, tels que les commutateurs 35, 36 et 37.

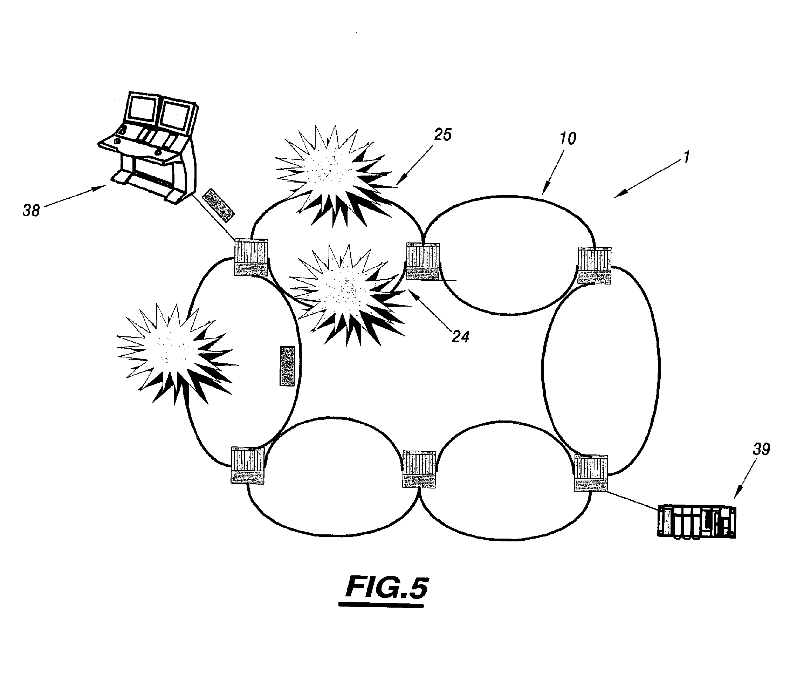

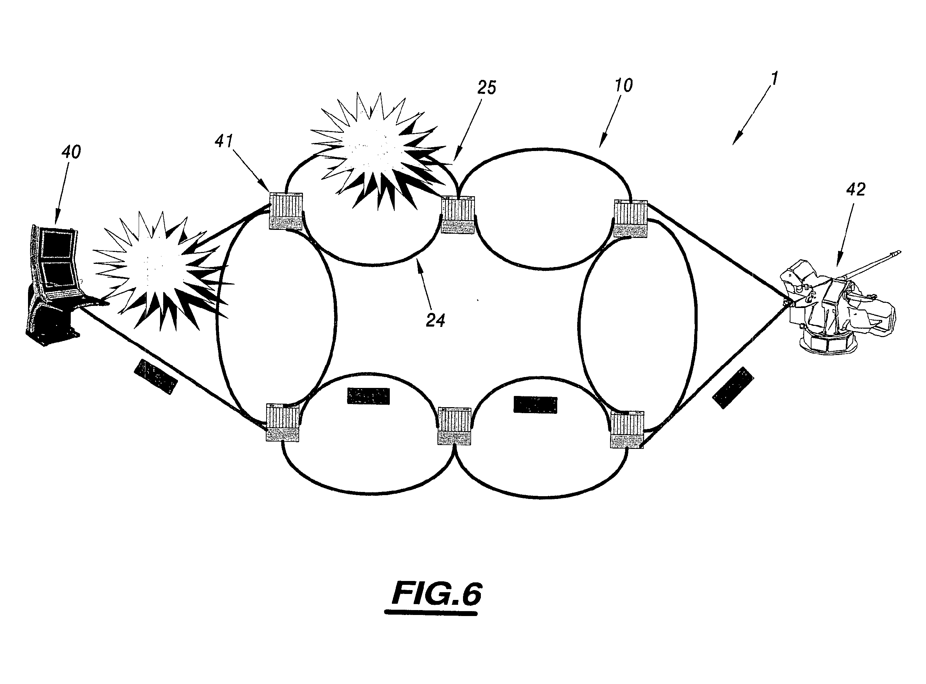

Les figures 5 et 6 illustrent les avantages apportés par de tels raccordements.

En effet, une telle structure est capable de supporter par exemple la coupure de trois lignes de transmission d'informations sur quatre, au niveau du réseau 10 entre deux organes fonctionnels par exemple 38 et 39, comme cela est illustré sur la figure 5 ou encore la coupure de l'une des lignes de transmission d'informations entre un organe fonctionnel 40 et l'un des commutateurs 41 de réseau, si celui-ci est raccordé à deux commutateurs de réseau différents, dans le cas par exemple où l'organe fonctionnel 42 est un organe sensible, tel que par exemple une arme ou autres.

On notera que les lignes de transmission d'informations peuvent comprendre par exemple des fibres optiques par exemple associées par paires dans un câble et que le réseau de transmission d'informations peut être formé par un réseau de type TCP/IP commuté.

Bien entendu, d'autres moyens peuvent être envisagés, de même que d'autres protocoles d'échange d'informations.

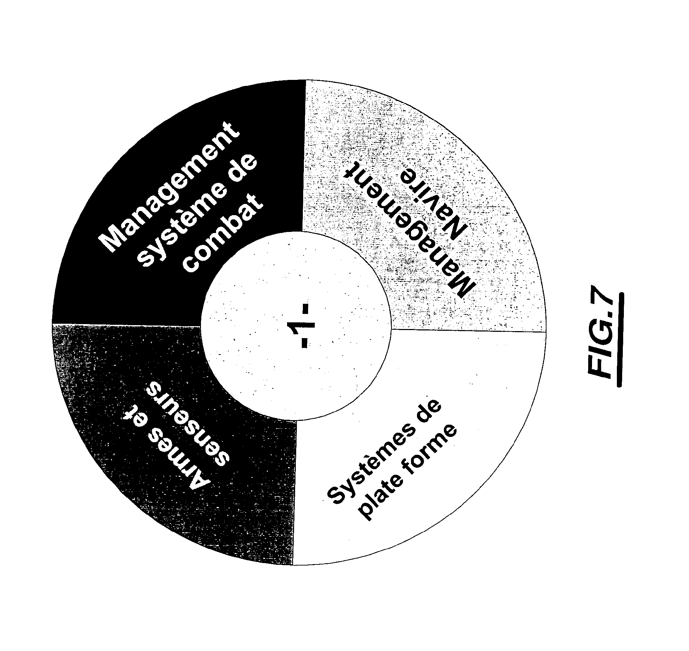

On conçoit alors comme cela est illustré sur la figure 7, que le système de transmission selon l'invention propose l'utilisation d'un réseau multiservices 1 constituant le centre nerveux de transmission d'informations de la plateforme entre les différents systèmes de management des fonctions de celle-ci.

Les différents systèmes, sous-systèmes et équipements ou organes fonctionnels de celle-ci peuvent alors se connecter à ce réseau et communiquer entre eux, ce qui permet d'obtenir une architecture garantissant l'entière évolutivité et modularité de la plateforme.

Ceci permet alors de proposer une plateforme équipée de tels moyens formant réseau de transmission d'informations, sur lesquels viennent se connecter les différents organes fonctionnels des différents systèmes de la plateforme, tout en permettant d'obtenir une maintenance et une logistique facilitées.

Par ailleurs, ceci permet également de réduire le câblage et les interfaces à un seul type de compétence.

De plus, le protocole mis en oeuvre, tel que par exemple le protocole TCP/IP commuté, est un protocole standard bien connu et déjà développé.

Dans les moyens formant réseau de transmission d'informations intégrés dans le système selon l'invention, les commutateurs de réseau sont raccordés par deux lignes de transmission d'informations, ce qui permet d'augmenter la fiabitité de ceux-ci en résistant à trois coupures. Les commutateurs peuvent être alimentés sur réseau secouru.

Par ailleurs, cette structure permet d'obtenir un temps de convergence du réseau, c'est-à-dire un temps de rétablissement après la perte d'une ligne ou d'un commutateur, inférieur à 500 millisecondes.

Comme cela a été indiqué précédemment, des organes fonctionnels ou encore des commutateurs de périphérique, peuvent être raccordés à deux commutateurs de réseau différents ou encore à deux cartes différentes d'un seul commutateur de réseau.

On sait en effet que l'on peut définir parmi les différents organes fonctionnels embarqués à bord d'une plateforme, des systèmes ou sous-systèmes critiques, c'est-à-dire des équipements dont la perte pourraient mettre en cause la sécurité ou la mission de la plateforme. Ces équipements dits critiques peuvent alors être connectés directement à un ou plusieurs commutateurs de réseau.

Les systèmes ou sous-systèmes non critiques, peuvent être connectés soit à un commutateur de périphérique, soit un commutateur de réseau, si celui est plus proche.

Les systèmes, sous-systèmes et organes ou équipements dits sensibles, c'est-à-dire ne tolérant aucune perte d'informations, avec un temps de convergence inférieur à 500 millisecondes, peuvent être reliés à deux commutateurs différents, grâce à une solution de double raccordement.

Comme cela a été indiqué précédemment, ceci permet de fiabiliser la transmission d'informations.

Une telle structure permet également aux moyens d'administration du réseau, d'obtenir une visualisation réelle et hiérarchique de l'architecture du réseau et de sa topologie exacte.

Ces moyens permettent également d'obtenir de façon précise, l'état de raccordement des commutateurs et des différents organes fonctionnels.

L'utilisation d'un logiciel d'administration du réseau permet également de surveiller l'état des équipements raccordés à celui-ci, afin par exemple d'anticiper les pannes éventuelles, d'obtenir des statistiques sur le fonctionnement global de ce réseau et de sauvegarder ou de restaurer à distance la configuration de chaque commutateur.

On notera également qu'un cloisonnement par exemple physique des flux d'informations permet le cas échéant, d'isoler un système, un sous-système ou autres sur des fibres optiques réservées au transport d'informations présentant un caractère particulier, notamment au niveau de leur accessibilité (diffusion restreinte, confidentiel, secret) en mettant en oeuvre par exemple des commutateurs présentant des niveaux de confidentialité différents.

Enfin, l'utilisation du système selon l'invention permet également d'utiliser des prises banalisées de raccordement des organes fonctionnels, permettant d'obtenir une simplification de l'intégration physique à la plateforme, et de réduire de façon très sensible les coûts liés notamment à l'ajout d'un organe fonctionnel supplémentaire.

## Revendications

1. Système de transmission d'informations entre différents organes fonctionnels d'une plateforme de combat, comportant au moins un système de plateforme (2) et un système de combat (3), **caractérisé en ce qu'**il comporte des moyens formant réseau (10) de transmission d'informations commun entre les organes du système de plateforme et du système de combat, comprenant une ossature de commutateurs de réseau (21,22) répartis dans la plateforme (11) et raccordés en boucle fermée par au moins une ligne de transmission d'informations (23).

2. Système selon la revendication 1, **caractérisé en ce que** les commutateurs de réseau (21,22) sont raccordés par deux lignes de transmission d'informations (24,25).

3. Système selon la revendication 1 ou 2, **caractérisé en ce que** les commutateurs de réseau (21,22) sont disposés sensiblement sur le plan médian longitudinal (16) de la plateforme (11) à au moins deux niveaux différents de celle-ci (12,14), pour former des branches supérieure et inférieure de la boucle.

4. Système selon la revendication 3, **caractérisé en ce que** la plateforme (11) est un bâtiment de surface et **en ce que** l'un (12) des niveaux sur lequel sont disposés les commutateurs de réseau (21) de la branche supérieure de la boucle, sont placés au-dessus du pont d'étanchéité de la plateforme (11) et les autres commutateurs de réseau de la branche inférieure de la boucle, en dessous de celui-ci.

5. Système selon la revendication 3 ou 4, **caractérisé en ce que** la plateforme (11) est divisée selon son axe longitudinal, en zones de sécurité (17,18,19,20) et **en ce que** chaque zone de sécurité comporte au moins un commutateur de réseau (21) de la branche supérieure de la boucle et un commutateur de réseau (22) de la branche inférieure de la boucle.

6. Système selon l'une quelconque des revendications 2 à 5, **caractérisé en ce que** les lignes de transmission d'informations (24,25) entre les commutateurs de réseau, sont disposées de part et d'autre du plan médian longitudinal (16) de la plateforme (11), de manière à être éloignées l'une de l'autre, entre ces commutateurs.

7. Système selon l'une quelconque des revendications précédentes, **caractérisé en ce que** des organes fonctionnels sont raccordés directement à au moins un commutateur de réseau.

8. Système selon la revendication 7, **caractérisé en ce que** des organes fonctionnels sont raccordés directement à deux commutateurs de réseau différents.

9. Système selon l'une quelconque des revendications précédentes, **caractérisé en ce que** des organes fonctionnels sont raccordés à au moins un commutateur de réseau, à travers au moins un commutateur de périphérique.

10. Système selon la revendication 9, **caractérisé en ce que** des organes fonctionnels sont raccordés à deux commutateurs de périphérique différents raccordés chacun à deux commutateurs de réseau différents.

11. Système selon l'une quelconque des revendications précédentes, **caractérisé en ce que** les lignes de transmission d'informations (23,24,25) comprennent des fibres optiques.

12. Système selon l'une quelconque des revendications précédentes, **caractérisé en ce que** le réseau (10) est un réseau TCP/IP commuté.
